# EUROPEAN PATENT APPLICATION

(11) **EP 4 803 487 A1**
(43) Date of publication of application: **09.09.2026**
(21) Application number: 24813087.4
(22) Date of filing: 30.09.2024
(51) Int. Cl.: C01G 53/00, H01M 4/525, H01M 4/505, H01M 10/0525

(54) **MODIFIED COBALT-FREE LITHIUM-RICH MANGANESE-BASED PRECURSOR AND PREPARATION METHOD THEREFOR**

(30) Priority: 03.11.2023 CN 202311455129
(71) Applicant: Henan Kelong New Energy Co., Ltd., Xinxiang, Henan 453000 (CN)
(72) Inventor: CHENG, Di, Xinxiang, Henan 453000 (CN); XU, Yunjun, Xinxiang, Henan 453000 (CN); WANG, Yanping, Xinxiang, Henan 453000 (CN); WANG, Shuai, Xinxiang, Henan 453000 (CN); WEN, Huiping, Xinxiang, Henan 453000 (CN); WANG, Wen, Xinxiang, Henan 453000 (CN); LI, Guohua, Xinxiang, Henan 453000 (CN); YANG, Hao, Xinxiang, Henan 453000 (CN)
(74) Representative: Studio Torta S.p.A.
(86) International application number: PCT/CN2024/122975
(87) International publication number: WO 2025/092359

(57) **Abstract**

Provided in the present disclosure is a method for preparing a modified cobalt-free lithium-rich manganese-based precursor. The prepared modified cobalt-free lithium-rich manganese-based precursor can effectively reduce the large amount of manganese series oxides adhering among and to surfaces of primary particles, causing the primary particles to be uniform and compact. Meanwhile, a specific surface area of the precursor reaches 40-80 m²/g, and a tap density is greater than 1.3 g/cm³. The precursor prepared by using a method of letting an oxidant solution and a reducing agent solution to flow in parallel into a reaction system in the present disclosure has the characteristics of being low in cost, environment-friendly, and pollution-free, and conventional protection methods of introducing inert gases such as nitrogen and the like are replaced at the same time, thereby effectively reducing safety risks of the reaction system due to a large pressure. To sum up, the cobalt-free lithium-rich manganese-based precursor prepared using the method can not only guarantee excellent indicators and morphology, but also reduce a manufacturing cost, which is in line with the concept of green and sustainable development.

## Description

This application claims priority to Chinese Patent Application No. 202311455129.7 filed on November 03, 2023, the application of which is hereby incorporated by reference in its entirety.

### Technical Field

The present disclosure relates to the technical field of positive electrode materials for lithium ion batteries, and in particular, to a modified cobalt-free lithium-rich manganese-based precursor and a preparation method thereof.

### Background

In recent years, rechargeable batteries have been in increasing demand in the fields of electronic digital products (cell phones, notebook computers, etc.), electric tools (electric scooters, unmanned aerial vehicles, etc.), and electric vehicles (EVs, HEVs, etc.). Lithium-ion batteries in today's market have a very broad demand prospects and application fields, and positive electrode materials affecting the electric performance of the lithium-ion batteries are also attracting more and more attention.

At present, a nickel-cobalt-manganese ternary positive electrode material are heavily researched and applied because of a high energy density, stable cycling performance and cycle life, and high rate performance. However, since the price of cobalt has continued to climb in recent years, leading to an increase in production costs, more and more precursor positive electrode materials are converted from ternary nickel cobalt manganese to binary nickel manganese, and the binary nickel manganese precursor positive electrode materials are considered to be one of the most competitive positive electrode materials in the future market.

However, in a process of preparing a binary nickel manganese precursor using a co-precipitation method also presents a large number of intractable problems. The most obvious problem is inhomogeneous manganese co-precipitation in prepared precursors, in regardless of large particles or small particles. The large amount of manganese series oxides adheres among and to the surfaces of primary particles, and a specific surface area is only up to 10-30 m²/g, affecting the indicators and morphology of the precursor, and simultaneously affecting the rate performance of the precursor positive electrode material.

### Summary

Based on the above problems, the present disclosure is intended to provide a method, so as to effectively solve the problem of inhomogeneous manganese co-precipitation during the production of a binary nickel manganese precursor, an oxidant solution and a reducing agent solution are used to replace inert gases such as nitrogen as protection, and a specific surface area of a manganese-rich precursor is increased, causing primary particles to be refined and uniform.

In order to implement the above objectives, the technical solution used in the present disclosure is to provide a method for preparing a modified cobalt-free lithium-rich manganese-based precursor, including the following steps.
1) A nickel-manganese mixed salt solution, an oxidant solution, and a reducing agent solution are prepared, where a concentration of the nickel-manganese mixed salt solution is 1.0-3.0 mol/L, and is prepared by one or more of sulphate, acetate, chloride salt, and nitrate of nickel and manganese; the oxidant solution has a temperature of 30-50 °C and a concentration of 0.02-0.1 g/L, and is prepared by one or more of potassium permanganate, perchloric acid, hypochlorous acid, hydrogen peroxide, sodium hypochlorite, potassium persulfate, sodium persulfate, and ammonium persulfate; and the reducing agent solution has a temperature of 30-50 °C and a concentration of 0.02-0.2 g/L, and is prepared by one or more of sodium thiosulfate, *vitamin C*, sodium D-isoascorbate, oxalic acid, potassium borohydride, sodium borohydride, and ethanol.
2) An alkali solution, a complexing agent solution, and water are prepared into a mixed solution according to a volume ratio being (0.2-0.4):(0.1-0.25):(40-70), and the mixed solution is placed in a reactor as a reaction base solution.
3) The nickel-manganese mixed salt solution, the oxidant solution, the reducing agent solution, the alkali solution, and the complexing agent solution flow in parallel into the reactor according to a volume ratio being (30-100):(0.1-3):(0.2-5):(15-55):(2-10), and pH is controlled at 10-13, and a temperature is controlled at 30-80 °C, so as to form reaction slurry.
4) after a reaction ends, aging treatment is performed on the reaction slurry, and then centrifugal washing, high-speed drying, vacuum drying, and vibration sieving are performed, so as to obtain a cobalt-free lithium-rich manganese-based precursor.

Preferably, in step 1), a molar ratio of nickel to manganese in the nickel-manganese mixed salt solution is (20-50):(50-80); and preferably, the molar ratio of the nickel to the manganese in the nickel-manganese mixed salt solution is (35-45):(65-65).

Preferably, in step 1), the concentration of the nickel-manganese mixed salt solution is 2.5-2.7 mol/L, the concentration of the oxidant solution is 0.02-0.05 g/L, and the concentration of the reducing agent solution is 0.1-0.2 g/L.

Preferably, in step 2), the alkali solution, the complexing agent solution, and the water are prepared into the mixed solution according to the volume ratio being (0.35-0.4):(0.15-0.25):(50-70), and the mixed solution is placed in the reactor as the reaction base solution; and preferably, the concentration of the alkali solution is 0.3-0.7 g/L, and the concentration of the complexing agent solution is 1-1.5 g/L.

Preferably, in step 3), the nickel-manganese mixed salt solution, the oxidant solution, the reducing agent solution, the alkali solution, and the complexing agent solution flow in parallel into the reactor according to the volume ratio being (80-100):(2-3):(4.5-5):(45-55):(6-9).

Preferably, in step 3), the pH is controlled at 10.9-11.9, and the temperature is controlled at 50-60 °C, so as to form the reaction slurry.

Preferably, in step 3), a rotary speed of the reactor is 200-1000 r/min; and preferably, the rotary speed of the reactor is 600-1000 r/min.

Preferably, the alkali solution is one or more of solutions of sodium hydroxide and potassium hydroxide, and the complexing agent solution is one or more of solutions of ammonia water, urea, Ethylenediaminetetraacetic Acid (EDTA), ethylenediamine, and citric acid; and a concentration of the alkali solution is 0.2-5 g/L, and a concentration of the complexing agent solution is 0.2-20 g/L.

The D50 of the modified cobalt-free lithium-rich manganese-based precursor prepared in the present disclosure is 5-20 µm, primary particles are short thin strip-shaped and are uniformly distributed, a tap density is greater than 1.3 g/cm³, and a specific surface area is between 40 and 80 m²/g.

Preferably, the tap density of the modified cobalt-free lithium-rich manganese-based precursor is not less than 1.95 g/cm³, and the specific surface area is 65-80 m²/g; and more preferably, the tap density of the modified cobalt-free lithium-rich manganese-based precursor is 1.95-2.1 g/cm³, and the specific surface area is 65-75 m²/g.

Preferably, the modified cobalt-free lithium-rich manganese-based precursor is short thin strip-shaped, and an aspect ratio is (5-13):1.

Traditional manganese-rich precursors are inhomogeneous in manganese co-precipitation, the large amount of manganese series oxides adheres among and to the surfaces of primary particles, seriously affecting the indicators and morphology of the precursors, and the electric performance of the precursor positive electrode material is also greatly affected, even producing safety hazards.

Compared with the related art, the beneficial effects of the present disclosure are that, the modified cobalt-free lithium-rich manganese-based precursor prepared in the present disclosure can effectively reduce the large amount of manganese series oxides adhering among and to surfaces of primary particles, causing the primary particles to be uniform and compact. Meanwhile, a specific surface area of the precursor reaches 40-80 m²/g, and a tap density is greater than 1.3 g/cm³. The precursor prepared by using a method of letting an oxidant solution and a reducing agent solution to flow in parallel into a reaction system in the present disclosure has the characteristics of being low in cost, environment-friendly, and pollution-free, and conventional protection methods of introducing inert gases such as nitrogen and the like are replaced at the same time, thereby effectively reducing safety risks of the reaction system due to a large pressure. To sum up, the cobalt-free lithium-rich manganese-based precursor prepared using the method can not only guarantee excellent indicators and morphology, but also reduce a manufacturing cost, which is in line with the concept of green and sustainable development.

### Brief Description of the Drawings

The drawings described herein are used to provide a further understanding of the present disclosure, and constitute a part of the present disclosure. The exemplary examples and descriptions of the present disclosure are used to explain the present disclosure and do not constitute an improper limitation of the present disclosure. In the drawings:
FIG. 1 shows an SEM diagram of a precursor prepared according to Example 1.
FIG. 2 shows an SEM diagram of a precursor prepared according to Example 2.
FIG. 3 shows an SEM diagram of a precursor prepared according to Example 3.
FIG. 4 shows an SEM diagram of a precursor prepared according to Comparative Example 1.

### Detailed Description of the Embodiments

It is to be noted that the embodiments in the present disclosure and the features in the embodiments may be combined with one another without conflict. The present disclosure will be described below in detail with reference to the drawings and the embodiments.

Unless otherwise specified, materials involved in the present disclosure may be homemade by conventional methods in the art or may be conveniently purchased from the market.

Unless otherwise specified, "solutions" in the present disclosure all refer to aqueous solutions.

As described in BACKGROUND in the present disclosure, there is a problem of inhomogeneous manganese co-precipitation during the production of a binary nickel manganese precursor in the related art. In order to solve the above problem, in a typical embodiment of the present disclosure, a method for preparing a modified cobalt-free lithium-rich manganese-based precursor is provided and includes the following steps: 1) a nickel-manganese mixed salt solution, an oxidant solution, and a reducing agent solution are prepared, where a concentration of the nickel-manganese mixed salt solution is 1.0-3.0 mol/L, and is prepared by one or more of sulphate, acetate, chloride salt, and nitrate of nickel and manganese; the oxidant solution has a temperature of 30-50 °C and a concentration of 0.02-0.1 g/L, and is prepared by one or more of potassium permanganate, perchloric acid, hypochlorous acid, hydrogen peroxide, sodium hypochlorite, potassium persulfate, sodium persulfate, and ammonium persulfate; and the reducing agent solution has a temperature of 30-50 °C and a concentration of 0.02-0.2 g/L, and is prepared by one or more of sodium thiosulfate, *vitamin C*, sodium D-isoascorbate, oxalic acid, potassium borohydride, sodium borohydride, and ethanol; 2) an alkali solution, a complexing agent solution, and water are prepared into a mixed solution according to a volume ratio being (0.2-0.4):(0.1-0.25):(40-70), and the mixed solution is placed in a reactor as a reaction base solution, where the alkali solution is one or more of solutions of sodium hydroxide and potassium hydroxide, and the complexing agent solution is one or more of solutions of ammonia water, urea, EDTA, ethylenediamine, and citric acid; and a concentration of the alkali solution is 0.2-5 g/L, and a concentration of the complexing agent solution is 0.2-20 g/L; 3) the nickel-manganese mixed salt solution, the oxidant solution, the reducing agent solution, the alkali solution, and the complexing agent solution flow in parallel into the reactor according to a volume ratio being (30-100):(0.1-3):(0.2-5):(15-55):(2-10), and pH is controlled at 10-13, and a temperature is controlled at 30-80 °C, so as to form reaction slurry; and 4) after a reaction ends, aging treatment is performed on the reaction slurry, and then centrifugal washing, high-speed drying, vacuum drying, and vibration sieving are performed, so as to obtain a cobalt-free lithium-rich manganese-based precursor.

In the present disclosure, the nickel-manganese mixed salt solution, the oxidant solution, and the reducing agent solution are prepared first, and at the same time, the alkali solution, the complexing agent solution, and the water are prepared into the mixed solution, and the mixed solution is placed in the reactor as the reaction base solution. Then the nickel-manganese mixed salt solution, the oxidant solution, the reducing agent solution, the alkali solution, and the complexing agent solution flow in parallel into the reactor according to a specific volume ratio, the pH and temperature are controlled for reaction, and during this process, the reaction slurry is formed through a complex reaction, a precipitation reaction, and an oxidation-reduction reaction. Finally, aging treatment is performed on the reaction slurry, and then centrifugal washing, high-speed drying, vacuum drying, and vibration sieving are performed, so as to obtain the cobalt-free lithium-rich manganese-based precursor.

In the present disclosure, the oxidant solution and the reducing agent solution flow in parallel into the reaction system, an oxidant causes the primary particles of the precursor to be refined and uniformly oxidized, a reducing agent causes the over refined primary particles to become excellent and uniform primary particles again due to a reduction impact, and the prepared modified cobalt-free lithium-rich manganese-based precursor can effectively reduce the large amount of manganese series oxides adhering among and to the surfaces of the primary particles, causing the primary particles to be uniform and compact, thereby increasing the specific surface area and the tap density. Meanwhile, by using the parallel flowing of the oxidant and the reducing agent to replace conventional protection methods of introducing inert gases such as nitrogen, safety risks of the reaction system due to a large pressure are effectively reduced, costs are low, and environment pollution is small.

In a preferred embodiment, in step 1), a molar ratio of nickel to manganese in the nickel-manganese mixed salt solution is (20-50):(50-80); and preferably, the molar ratio of the nickel to the manganese in the nickel-manganese mixed salt solution is (35-45):(65-65). The shapes and performance of the particles may be further improved under the above conditions.

In order to further balance cost and product indicators, in a preferred embodiment, in step 1), the concentration of the nickel-manganese mixed salt solution is 2.5-2.7 mol/L, the concentration of the oxidant solution is 0.02-0.05 g/L, and the concentration of the reducing agent solution is 0.1-0.2 g/L.

In a preferred embodiment, in step 2), the alkali solution, the complexing agent solution, and the water are prepared into the mixed solution according to the volume ratio being (0.35-0.4):(0.15-0.25):(50-70), and the mixed solution is placed in the reactor as the reaction base solution; and preferably, the concentration of the alkali solution is 0.3-0.7 g/L, and the concentration of the complexing agent solution is 1-1.5 g/L. Under the above conditions, the primary particles are more uniform, and it is easier to control an aspect ratio.

For the purpose of eliminating the manganese oxides on the surfaces of the primary particles more fully, controlling the aspect ratio, and further achieving high tap density and specific surface area simultaneously, in a preferred embodiment, in step 3), the nickel-manganese mixed salt solution, the oxidant solution, the reducing agent solution, the alkali solution, and the complexing agent solution flow in parallel into the reactor according to the volume ratio being (80-100):(2-3):(4.5-5):(45-55):(6-9).

In a preferred embodiment, in step 3), the pH is controlled at 10.9-11.9, and the temperature is controlled at 50-60 °C, so as to form the reaction slurry. Under the above conditions, it is easier to control the reaction conditions, and simultaneously achieve high tap density and specific surface area; and the manganese oxides on the surfaces of the primary particles are further reduced.

Based on similar reasons, in a preferred embodiment, in step 3), a rotary speed of the reactor is 200-1000 r/min; and preferably, the rotary speed of the reactor is 600-1000 r/min.

Another typical embodiment of the present disclosure further provides a modified cobalt-free lithium-rich manganese-based precursor, which is prepared by using the preparation method of the present disclosure. Because of the use of the preparation method of the present disclosure, manganese series oxides adhering among and to surfaces of primary particles are reduced; and the modified cobalt-free lithium-rich manganese-based precursor has a significantly increased specific surface area and tap density, and is low in safety risk, low in cost, and small in environment pollution.

In particular, in a preferred embodiment, the D50 of the modified cobalt-free lithium-rich manganese-based precursor is 5-20 µm, a tap density is greater than 1.3 g/cm³, and a specific surface area is 40-80 m²/g; preferably, the tap density of the modified cobalt-free lithium-rich manganese-based precursor is not less than 1.95 g/cm³, and the specific surface area is 65-80 m²/g; and more preferably, the tap density of the modified cobalt-free lithium-rich manganese-based precursor is 1.95-2.1 g/cm³, and the specific surface area is 65-75 m²/g.

In addition, due to simultaneous introduction of the oxidant and the reducing agent, in a preferred embodiment, the modified cobalt-free lithium-rich manganese-based precursor is short thin strip-shaped, and an aspect ratio is (5-13):1.

The present disclosure is further described in detail below with reference to specific examples, and the examples cannot be construed as limiting the scope of protection claimed in the present disclosure.

### Example 1

1) A 2.5 mol/L nickel-manganese mixed salt solution was prepared by using nickel sulfate and manganese sulfate, and a molar ratio of nickel to manganese was 35:65; and a 40 °C and 0.03 g/L potassium persulfate solution, and a 40 °C and 0.10 g/L sodium thiosulfate solution were prepared.
2) A 0.3 g/L sodium hydroxide solution, a 1 g/L urea solution, and pure water were prepared into a mixed solution according to a volume ratio being 0.35:0.15:50, and the mixed solution was placed in a reactor as a reaction base solution.
3) The 2.5 mol/L nickel-manganese mixed salt solution, the 0.03 g/L potassium persulfate solution, the 0.10 g/L sodium thiosulfate solution, the 0.3 g/L sodium hydroxide solution, and the 1 g/L urea solution flowed in parallel into the reactor according to a volume ratio being 80:3:4.5:45:6, pH was controlled at 11.0±0.1, a temperature was controlled at 50 °C, and a rotary speed was controlled at 600 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, the molar ratio of nickel to manganese was 35:65, D50 was 10 µm, and primary particles were short thin strip-shaped, with an aspect ratio being 6.66:1, and were uniformly distributed, with a tap density being 1.95 g/cm³, and a specific surface area being 65 m²/g.

### Example 2

1) A 2.5 mol/L nickel-manganese mixed salt solution was prepared by using nickel sulfate and manganese sulfate, and a molar ratio of nickel to manganese was 40:60; and a 40 °C and 0.02 g/L sodium persulfate solution, and a 40 °C and 0.10 g/L *vitamin C* solution were prepared.
2) A 0.5 g/L sodium hydroxide, 1.2 g/L ammonia water, and pure water were prepared into a mixed solution according to a volume ratio being 0.4:0.2:60, and the mixed solution was placed in a reactor as a reaction base solution.
3) The 2.5 mol/L nickel-manganese mixed salt solution, the 0.02 g/L sodium persulfate solution, the 0.10 g/L *vitamin C* solution, the 0.5 g/L sodium hydroxide solution, and the 1.2 g/L ammonia water flowed in parallel into the reactor according to a volume ratio being 90:2.5:5:50:7, pH was controlled at 11.5±0.1, a temperature was controlled at 55 °C, and a rotary speed was controlled at 800 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, the molar ratio of nickel to manganese was 40:60, D50 was 9 µm, and primary particles were short thin strip-shaped, with an aspect ratio being 10.51:1, and were uniformly distributed, with a tap density being 2.0 g/cm³, and a specific surface area being 68 m²/g.

### Example 3

1) A 2.7 mol/L nickel-manganese mixed salt solution was prepared by using nickel acetate and manganese acetate, and a molar ratio of nickel to manganese was 45:55; and a 40 °C and 0.05 g/L hydrogen peroxide solution, and a 40 °C and 0.20 g/L oxalic acid solution were prepared.
2) A 0.7 g/L sodium hydroxide solution, a 1.5 g/L urea solution, and pure water were prepared into a mixed solution according to a volume ratio being 0.4:0.25:70, and the mixed solution was placed in a reactor as a reaction base solution.
3) The 2.7mol/L nickel-manganese mixed salt solution, the 0.05 g/L hydrogen peroxide solution, the 0.20 g/L oxalic acid solution, the 0.7 g/L sodium hydroxide solution, and the 1.5 g/L urea solution flowed in parallel into the reactor according to a volume ratio being 100:2:5:55:9, pH was controlled at 11.8±0.1, a temperature was controlled at 60 °C, and a rotary speed was controlled at 1000 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, the molar ratio of nickel to manganese was 45:55, D50 was 8 µm, and primary particles were short thin strip-shaped, with an aspect ratio being 11.09:1, and were uniformly distributed, with a tap density being 2.1 g/cm³, and a specific surface area being 75 m²/g.

### Example 4

1) A 1.0 mol/L nickel-manganese mixed salt solution was prepared by using nickel sulfate and manganese sulfate, and a molar ratio of nickel to manganese was 20:80; and a 30 °C and 0.02 g/L potassium persulfate solution, and a 30 °C and 0.02 g/L sodium thiosulfate solution were prepared.
2) A 0.2 g/L sodium hydroxide solution, a 0.2 g/L urea solution, and pure water were prepared into a mixed solution according to a volume ratio being 0.2:0.1:70, and the mixed solution was placed in a reactor as a reaction base solution.
3) The nickel-manganese mixed salt solution, the potassium persulfate solution, the sodium thiosulfate solution, the sodium hydroxide solution, and the urea solution flowed in parallel into the reactor according to a volume ratio being 30:3:5:55:10, pH was controlled at 10.1±0.1, a temperature was controlled at 30 °C, and a rotary speed was controlled at 1000 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, D50 was 8 µm, and primary particles were short thin strip-shaped, with an aspect ratio being 9.98:1, and were uniformly distributed, with a tap density being 1.88 g/cm³, and a specific surface area being 54 m²/g.

### Example 5

1) A 3.0 mol/L nickel-manganese mixed salt solution was prepared by using nickel sulfate and manganese sulfate, and a molar ratio of nickel to manganese was 50:50; and a 50 °C and 0.1 g/L potassium persulfate solution, and a 50 °C and 0.2 g/L sodium thiosulfate solution were prepared.
2) A 5 g/L sodium hydroxide solution, a 20 g/L urea solution, and pure water were prepared into a mixed solution according to a volume ratio being 0.4:0.25:40, and the mixed solution was placed in a reactor as a reaction base solution.
3) The nickel-manganese mixed salt solution, the potassium persulfate solution, the sodium thiosulfate solution, the sodium hydroxide solution, and the urea solution flowed in parallel into the reactor according to a volume ratio being 100:0.1:0.2:15:2, pH was controlled at 12.9±0.1, a temperature was controlled at 80 °C, and a rotary speed was controlled at 200 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, D50 was 9 µm, and primary particles were short thin strip-shaped, with an aspect ratio being 12.02:1, and were uniformly distributed, with a tap density being 1.79 g/cm³, and a specific surface area being 70 m²/g.

### Comparative Example 1

A 0.3 g/L sodium hydroxide solution, a 1 g/L urea solution, and pure water were prepared into a mixed solution according to a volume ratio being 0.35:0.15:50, and the mixed solution was placed in a reactor as a reaction base solution; then a nickel-manganese mixed sulfate solution (a molar ratio of nickel to manganese being 35:65, and a concentration being 2.5 mol/L), the 0.3 g/L sodium hydroxide solution, and the 1 g/L urea solution flowed in parallel into the reactor for reaction according to a volume ratio being 80:45:6, a rotary speed of the reactor was 600 r/min, and at the same time, an inert gas such as nitrogen was used as a protective gas at a flow rate of 10 L/min into the reaction system to protect the whole process; a temperature of the reaction system was controlled at 50 °C, pH was controlled at 11.0±0.1, feeding was stopped until D50 was 10 µm, and the reaction was ended; and aging treatment, centrifugal washing, high-speed drying, vacuum drying, and vibration sieving were performed to obtained a manganese-rich precursor.

### Comparative Example 2

1) A 0.5 mol/L nickel-manganese mixed salt solution was prepared by using nickel sulfate and manganese sulfate, and a molar ratio of nickel to manganese was 15:85; and a 20 °C and 0.01 g/L potassium persulfate solution, and a 20 °C and 0.01 g/L sodium thiosulfate solution were prepared.
2) A 0.1 g/L sodium hydroxide solution, a 0.1 g/L urea solution, and pure water were prepared into a mixed solution according to a volume ratio being 0.15:0.05:75, and the mixed solution was placed in a reactor as a reaction base solution.
3) The nickel-manganese mixed salt solution, the potassium persulfate solution, the sodium thiosulfate solution, the sodium hydroxide solution, and the urea solution flowed in parallel into the reactor according to a volume ratio being 25:3.5:5.5:60:12, pH was controlled at 9.5±0.1, a temperature was controlled at 20 °C, and a rotary speed was controlled at 1100 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, D50 was 10 µm, and primary particles were short thin strip-shaped, with an aspect ratio being 3.54:1, and were uniformly distributed, with a tap density being 1.19 g/cm³, and a specific surface area being 35 m²/g.

### Comparative Example 3

1) A 3.5 mol/L nickel-manganese mixed salt solution was prepared by using nickel sulfate and manganese sulfate, and a molar ratio of nickel to manganese was 55:45; and a 60 °C and 0.12 g/L potassium persulfate solution, and a 60 °C and 0.22 g/L sodium thiosulfate solution were prepared.
2) A 5.5 g/L sodium hydroxide solution, a 21 g/L urea solution, and pure water were prepared into a mixed solution according to a volume ratio being 0.45:0.3:35, and the mixed solution was placed in a reactor as a reaction base solution.
3) The nickel-manganese mixed salt solution, the potassium persulfate solution, the sodium thiosulfate solution, the sodium hydroxide solution, and the urea solution flowed in parallel into the reactor according to a volume ratio being 110:0.05:0.1:10:1, pH was controlled at 13.5±0.1, a temperature was controlled at 90 °C, and a rotary speed was controlled at 150 r/min, so as to form reaction slurry.
4) After a reaction ended, aging treatment was performed on the reaction slurry, and then centrifugal washing, high-speed drying, vacuum drying, and vibration sieving were performed to obtain a cobalt-free lithium-rich manganese-based precursor. For the obtained modified cobalt-free lithium-rich manganese-based precursor, D50 was 10 µm, and primary particles were short thin strip-shaped, with an aspect ratio being 2.99:1, and were uniformly distributed, with a tap density being 1.25 g/cm³, and a specific surface area being 30 m²/g.

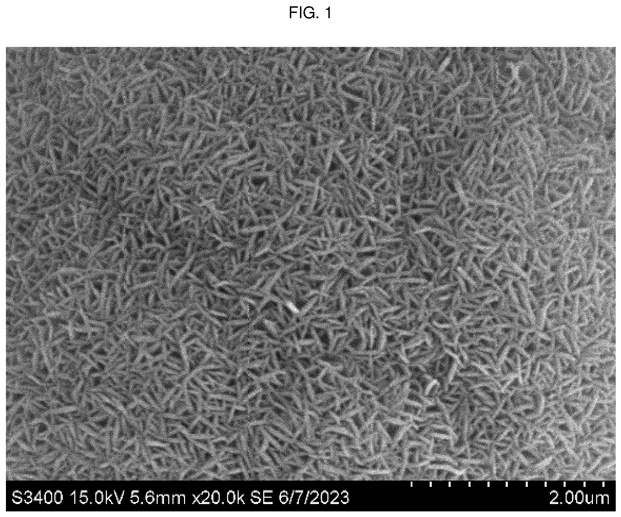

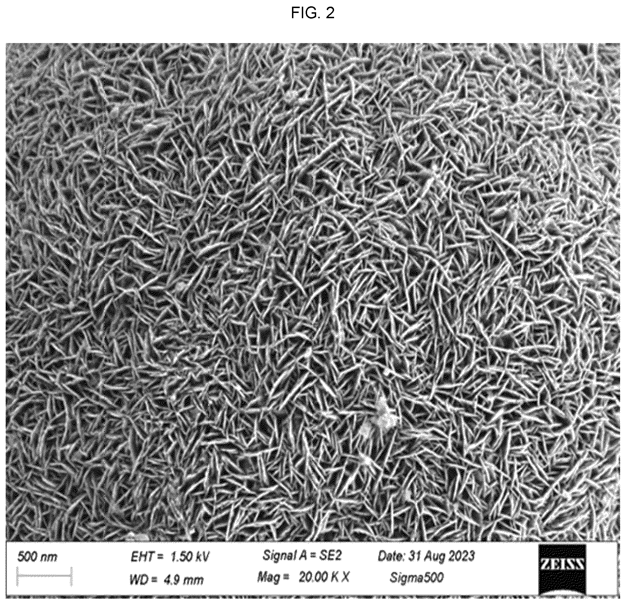

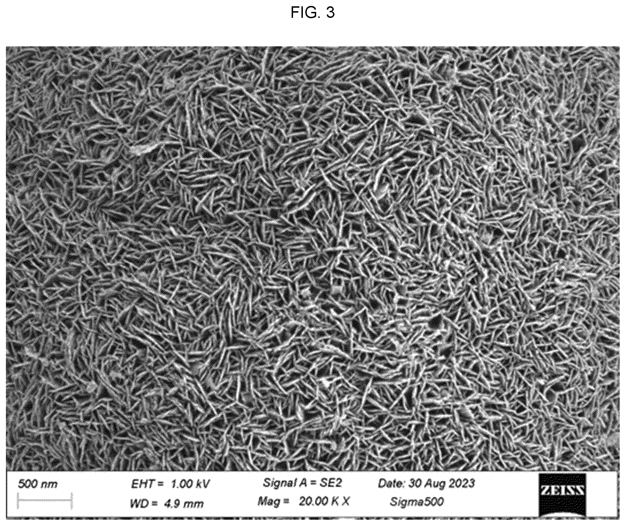

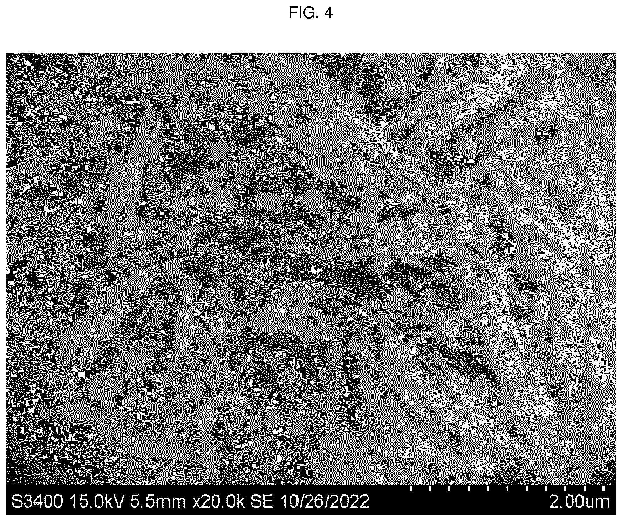

An SEM diagram of a precursor prepared according to Example 1 was shown in FIG. 1; an SEM diagram of a precursor prepared according to Example 2 was shown in FIG. 2; an SEM diagram of a precursor prepared according to Example 3 was shown in FIG. 3; and an SEM diagram of a precursor prepared according to Comparative Example 1 was shown in FIG. 4.

### Test method:

D50: laser particle size analyzer.

Aspect ratio of primary particle: scanning electron microscope.

Tap density: tap density instrument.

Specific surface area: specific surface area instrument.

In Comparative Example 1, it was to be noted that, in the process of preparing the manganese-rich precursor using the method, since the inert gas such as nitrogen was used as the protective gas and introduced into the reaction system throughout the whole process, a pressure of the reaction system reached 5000-15000 Pa, leading to potential safety hazards to a certain extent, and the large amount of manganese series oxides adhered among and to the surfaces of the primary particles of the prepared precursor, which was difficult to remove in subsequent treatment, resulting in serious problems of inhomogeneous and insufficient manganese co-precipitation. Meanwhile, all indicators of the precursor also did not achieve target requirements, even if the tap density reached above 2.0 g/cm³, it also faced the problem of primary particle breakage and small specific surface areas, and the specific surface area was only up to 10-30 m²/g, seriously affecting the electric performance of a manganese-rich precursor positive electrode material.

To sum up, it might be learned that during the preparation of the manganese-rich precursor of the present disclosure, the function of the oxidant was to cause the primary particles of the precursor to be refined and uniformly oxidized; the function of the reducing agent was to cause the over refined primary particles to become excellent and uniform primary particles again due to a reduction impact, so as to achieve a desired shape. The most considerable was the great improvement of the serious problem of inhomogeneous and insufficient manganese co-precipitation caused by difficult removing of the large amount of manganese series oxides adhering among and to the surfaces of the primary particles of the precursor during subsequent treatments, and the specific surface area was increased to 40-80 m²/g, such that all the indicators and excellent shapes of the manganese-rich precursor were improved, and the electric performance of the manganese-rich precursor positive electrode material was improved. In addition, it might be seen that, when all process parameters were all within a preferred range of the present disclosure, the comprehensive performance of the material was optimal.

It is apparent that, finally, it should be emphasized that a person skilled in the field of production of the precursor may produce a precursor superior to that of the present disclosure in accordance with the embodiments set forth herein. However, in the light of the patent invention of the inventor, any technical scope belonging to the present disclosure that is replaced or substituted by the person skilled in the same art shall fall within the scope of the protection and the scope of disclosure of the present disclosure, and does not make the essence of the corresponding technical solutions of others out of the scope of the technical solutions of the embodiments of the present disclosure.

## Claims

1. A method for preparing a modified cobalt-free lithium-rich manganese-based precursor, comprising the following steps:
1) preparing a nickel-manganese mixed salt solution, an oxidant solution, and a reducing agent solution, wherein a concentration of the nickel-manganese mixed salt solution is 1.0-3.0 mol/L, and is prepared by one or more of sulphate, acetate, chloride salt, and nitrate of nickel and manganese; the oxidant solution has a temperature of 30-50 °C and a concentration of 0.02-0.1 g/L, and is prepared by one or more of potassium permanganate, perchloric acid, hypochlorous acid, hydrogen peroxide, sodium hypochlorite, potassium persulfate, sodium persulfate, and ammonium persulfate; and the reducing agent solution has a temperature of 30-50 °C and a concentration of 0.02-0.2 g/L, and is prepared by one or more of sodium thiosulfate, *vitamin C*, sodium D-isoascorbate, oxalic acid, potassium borohydride, sodium borohydride, and ethanol;
2) preparing an alkali solution, a complexing agent solution, and water into a mixed solution according to a volume ratio being (0.2-0.4):(0.1-0.25):(40-70), and placing the mixed solution in a reactor as a reaction base solution, wherein the alkali solution is one or more of solutions of sodium hydroxide and potassium hydroxide, and the complexing agent solution is one or more of solutions of ammonia water, urea, EDTA, ethylenediamine, and citric acid; and a concentration of the alkali solution is 0.2-5 g/L, and a concentration of the complexing agent solution is 0.2-20 g/L;
3) letting the nickel-manganese mixed salt solution, the oxidant solution, the reducing agent solution, the alkali solution, and the complexing agent solution to flow in parallel into the reactor according to a volume ratio being (30-100):(0.1-3):(0.2-5):(15-55):(2-10), and controlling pH at 10-13 and a temperature at 30-80 °C, so as to form reaction slurry; and
4) after a reaction ends, performing aging treatment on the reaction slurry, and then performing centrifugal washing, high-speed drying, vacuum drying, and vibration sieving, so as to obtain a cobalt-free lithium-rich manganese-based precursor.

2. The method for preparing a modified cobalt-free lithium-rich manganese-based precursor according to claim 1, wherein in step 1), a molar ratio of nickel to manganese in the nickel-manganese mixed salt solution is (20-50):(50-80); and preferably, the molar ratio of the nickel to the manganese in the nickel-manganese mixed salt solution is (35-45):(65-65).

3. The method for preparing a modified cobalt-free lithium-rich manganese-based precursor according to claim 1 or 2, wherein in step 1), the concentration of the nickel-manganese mixed salt solution is 2.5-2.7 mol/L, the concentration of the oxidant solution is 0.02-0.05 g/L, and the concentration of the reducing agent solution is 0.1-0.2 g/L.

4. The method for preparing a modified cobalt-free lithium-rich manganese-based precursor according to any one of claims 1 to 3, wherein in step 2), the alkali solution, the complexing agent solution, and the water are prepared into the mixed solution according to the volume ratio being (0.35-0.4):(0.15-0.25):(50-70), and the mixed solution is placed in the reactor as the reaction base solution; and preferably, the concentration of the alkali solution is 0.3-0.7 g/L, and the concentration of the complexing agent solution is 1-1.5 g/L.

5. The method for preparing a modified cobalt-free lithium-rich manganese-based precursor according to any one of claims 1 to 4, wherein in step 3), the nickel-manganese mixed salt solution, the oxidant solution, the reducing agent solution, the alkali solution, and the complexing agent solution flow in parallel into the reactor according to the volume ratio being (80-100):(2-3):(4.5-5):(45-55):(6-9).

6. The method for preparing a modified cobalt-free lithium-rich manganese-based precursor according to any one of claims 1 to 5, wherein in step 3), the pH is controlled at 10.9-11.9, and the temperature is controlled at 50-60 °C, so as to form the reaction slurry.

7. The method for preparing a modified cobalt-free lithium-rich manganese-based precursor according to any one of claims 1 to 6, wherein in step 3), a rotary speed of the reactor is 200-1000 r/min; and preferably, the rotary speed of the reactor is 600-1000 r/min.

8. A modified cobalt-free lithium-rich manganese-based precursor, prepared by using the preparation method according to any one of claims 1 to 7.

9. The modified cobalt-free lithium-rich manganese-based precursor according to claim 8, wherein the D50 of the modified cobalt-free lithium-rich manganese-based precursor is 5-20 µm, a tap density is greater than 1.3 g/cm³, and a specific surface area is 40-80 m²/g; preferably, the tap density of the modified cobalt-free lithium-rich manganese-based precursor is not less than 1.95 g/cm³, and the specific surface area is 65-80 m²/g; and more preferably, the tap density of the modified cobalt-free lithium-rich manganese-based precursor is 1.95-2.1 g/cm³, and the specific surface area is 65-75 m²/g.

10. The modified cobalt-free lithium-rich manganese-based precursor according to claim 8 or 9, wherein the modified cobalt-free lithium-rich manganese-based precursor is short thin strip-shaped, and an aspect ratio is (5-13):1.
